# DEMANDE DE BREVET EUROPEEN

(11) **EP 1 283 010 A1**
(43) Date de publication de la demande: **12.02.2003**
(21) Numéro de dépôt: 02292010.2
(22) Date de dépôt: 09.08.2002
(51) Int. Cl.: A01N 63/00, C12S 9/00, C12N 1/20, A61L 2/00

(54) **Compositions à base de complexes bactériens et leurs applications pour la prévention des infections nosocomiales.**

(30) Priorité: 10.08.2001 FR 0110701
(71) Demandeur: COBIOTEX, 33600 Pessac (FR)
(72) Inventeur: Penaud, Jean, 37000 Tours (FR)
(74) Mandataire: Corizzi, Valérie

(57) **Abrégé**

Lesdites compositions sont essentiellement constituées d'un complexe bactérien, sous la forme d'une poudre, prête à être mise en solution dans de l'eau ; le complexe bactérien comprend essentiellement au moins deux *Bacillus* non pathogènes, sélectionnés dans le groupe constitué par *B. subtilis, B. amyloliquefasciens, B. circulans* et *B. megaterium,* chacun à une concentration comprise entre 10³ et 5.10⁵ ufc/g, au moins deux *Lactobacillus* non pathogènes, sélectionnés dans le groupe constitué par *L. paracasei, L. acidophilus* et *L. rhamnosus* et au moins un *Pediococcus* non pathogène, chacun à une concentration de 10⁵ à 5.10⁹ ufc/g ; de telles compositions sont utilisées pour la production d'une solution aqueuse apte à former un biofilm destiné à prévenir les maladies nosocomiales.

## Description

La présente invention est relative à l'utilisation de complexes bactériens dans la prévention des infections nosocomiales, à des compositions contenant lesdits complexes, ainsi qu'à des souches particulières contenues dans ces complexes.

Pour prévenir les infections nosocomiales dans les hôpitaux, les cliniques et autres lieux de séjour des personnes fragiles, on désinfecte régulièrement les locaux concernés avec des produits chimiques de type bactériostatique ou bactéricide. Ces produits n'éradiquent pas complètement les bactéries pathogènes résistantes, qui de ce fait, acquièrent des propriétés nouvelles : persistance, résistance aux agressions physico-chimiques et virulence et induisent des infections sévères, voire mortelles chez les individus dont la réponse immune est diminuée.

La Demande de Brevet n° 0 852 114, relative à des procédés d'éradication systématique du portage d'agents pathogènes par des animaux, divulgue différentes compositions à base de bactéries non pathogènes, utiles par pulvérisation et épandage, pour éradiquer les agents pathogènes retrouvés au niveau des animaux, au niveau de la litière ou des fosses de réception des déjections ou même au niveau du bâtiment. En particulier, il est précisé dans cette Demande de brevet que les micro-organismes présents dans l'ambiance des bâtiments renfermant des animaux sont pour certains attirés et fixés sur l'ensemble des parois du bâtiment où ils constituent un biofilm négatif. Ce biofilm négatif, résistant aux différents traitements de désinfection (formol gazeux, chlore, par exemple), du fait, notamment de la libération de glyco-protéines de stress par les micro-organismes le constituant, comprend aléatoirement différentes souches bactériennes qui ont été présentes au cours du temps au sein de ces bâtiments et inclut donc des bactéries pathogènes. Ce biofilm négatif se développe sur toutes les surfaces disponibles et, au fur et à mesure de l'utilisation du bâtiment, se charge en bactéries pathogènes. Ainsi, lorsqu'il renferme des bactéries pathogènes majeures, le biofilm négatif constitue un risque permanent car, suivant sa charge en micro-organismes, certains éléments seront éjectés de ce biofilm, du fait du manque de place ou d'une reprise d'activité amenant à une multiplication de certains micro-organismes. La méthode d'éradication d'agents pathogènes chez des animaux, proposée dans cette Demande de Brevet, pour être efficace, doit intervenir simultanément au niveau digestif et au niveau de l'environnement et permet d'éliminer le risque de réinfestation, notamment en modifiant l'écosystème (stabilité et orientation de celui-ci) ; toutefois, cette Demande de Brevet, n'envisage en aucun cas la possibilité de mettre en oeuvre uniquement les complexes bactériens décrits, pour prévenir des infections nosocomiales, qui constituent un environnement radicalement différent de celui envisagé dans cette Demande de Brevet.

Or, la Demanderesse a observé qu'il se formait, dans les lieux d'hospitalisation, des biofilms négatifs renfermant des bactéries pathogènes, qui dans ce contexte particulier, deviennent plus virulentes et acquièrent une résistance aux antibiotiques ; en effet, on observe :
- une modification de structure et/ou de forme de certaines bactéries, notamment de certains bacilles qui deviennent coccoïdes,
- la concentration d'organites indispensables aux micro-organismes avec perte de volume du cytoplasme, et
- l'accroissement de la virulence des bactéries qui, lorsqu'elles ressortent de ce biofilm négatif, induisent le développement de maladies nosocomiales ; en effet, les colonies de bactéries qui se recréent après passage sur un biofilm négatif sont plus résistantes aux antibiotiques d'au moins un facteur 50.

La Demanderesse s'est, en conséquence, donnée pour but de mettre au point un procédé apte à prévenir les infections nosocomiales, dans les différents lieux d'hospitalisation.

La Demanderesse a trouvé, de manière surprenante, un moyen de neutraliser les effets des biofilms négatifs qui se forment dans les lieux d'hospitalisation et ce, malgré les traitements de désinfection de surface utilisés.

En effet, elle a trouvé que des compositions à base de certains complexes bactériens non pathogènes permettent la création d'un biofilm positif par pulvérisation des surfaces à traiter ; un tel biofilm positif neutralise les effets du biofilm négatif, tel que défini ci-dessus. Ces compositions sont, de préférence, mises en oeuvre sous forme liquide par un procédé de pulvérisation des surfaces susceptibles d'être infestées par des bactéries pathogènes nosocomiales. De manière surprenante, un tel biofilm positif, permet d'empêcher ou tout du moins de contrecarrer, le développement des bactéries pathogènes responsables des infections nosocomiales.

La présente invention a donc pour objet l'utilisation d'une composition essentiellement constituée d'un complexe bactérien, sous la forme d'une poudre, lequel complexe bactérien comprend essentiellement au moins deux *Bacillus* non pathogènes, sélectionnés dans le groupe constitué par *B. subtilis, B. amyloliquefasciens, B. circulans* et *B. megaterium,* chacun à une concentration comprise entre 10³ et 5.10⁵ ufc/g, au moins deux *Lactobacillus* non pathogènes, sélectionnés dans le groupe constitué par *L. paracasei*, *L. acidophilus* et *L. rhamnosus* et au moins un *Pediococcus* non pathogène, chacun à une concentration de 10⁵ à 5.10⁹ ufc/g, pour la production d'une solution aqueuse apte à former un biofilm destiné à prévenir les maladies nosocomiales, c'est-à-dire actif sur les souches nosocomiales, telles que *Listeria innocua, Micrococcus luteus, Salmonella typhimurium, Staphylococcus aureus, Enterococcus faecium, Escherichia coli, Klebsiella pneumoniae, Acinetobacter sp.* ou *Pseudomonas aeruginosa.*

De manière surprenante, les complexes bactériens sélectionnés et aux concentrations envisagées, présentent des caractéristiques qui permettent effectivement d'inhiber la prolifération des bactéries pathogènes nosocomiales.

Selon un mode de réalisation avantageux de ladite utilisation, ladite composition comprend en outre au moins un *Lactococcus,* présent aux mêmes concentrations que les *Lactobacillus* et les *Pediococcus*.

Selon un autre mode de réalisation avantageux de ladite utilisation, ledit complexe bactérien est associé à au moins un support ou diluant nutritif soluble dans l'eau sélectionné dans le groupe constitué par des sources d'acides aminés tel qu'un extrait de levure à 0,01-0,5 % et des sucres (lactose, par exemple).

De tels diluants, associés aux différents complexes bactériens, mis en oeuvre en solution aqueuse, et destinés à la pulvérisation des parois, des plafonds et des sols des bâtiments constituent une réserve nutritive pour les bactéries et leur confèrent une activité accrue ainsi qu'une vitesse de multiplication plus importante.

Certains des différents complexes bactériens utiles dans la présente invention ont été décrits dans la Demande de Brevet européen n°0 852 114 et mettent en oeuvre les souches décrites dans la Demande de Brevet européen n° 0 720 974, à savoir :
. des souches de *Bacillus* à Gram positif, susceptibles d'utiliser comme source d'azote, de l'azote minéral, notamment l'ammoniaque, les nitrates, les nitrites et des molécules d'azote organique telles que l'urée, l'urate, les aminoacides, les bases azotées ou d'autres composés azotés de faible poids moléculaire, présentant au moins l'une des activités enzymatiques suivantes : activité amylolytique, activité cellulolytique, activité lignocellulolytique, activité pectinolytique, activité lipolytique, activité protéolytique, activité kératolytique et au moins les caractéristiques biochimiques suivantes : gélatinase +, catalase +, uréase -, oxydase -, indole -, et qui sont de préférence aérobies/anaérobies facultatives. Lesdites souches de *Bacillus* ont été déposées auprès de la Collection Nationale de Cultures de Micro-organismes (CNCM), en date du 8 juin 1994, pour ce qui concerne *Bacillus subtilis,* sous les numéros I-1433, I-1438 et I-1440, pour ce qui concerne *Bacillus amyloliquefaciens*, sous les numéros I-1434 et I-1435, pour ce qui concerne *Bacillus megaterium*, sous le numéro I-1436 et pour ce qui concerne *Bacillus circulans,* sous le numéro I-1439 ;
. des souches de *Lactobacillus* à Gram positif, susceptibles d'utiliser comme source d'azote, de l'azote minéral, notamment l'ammoniaque, les nitrates, les nitrites et des molécules d'azote organique telles que l'urée, l'urate, les aminoacides, les bases azotées ou d'autres composés azotés de faible poids moléculaire, qui présentent au moins une activité de type bactériocine ou bactériocine-like, et au moins les caractéristiques biochimiques suivantes : catalase -, oxydase - et qui sont de préférence aérobies/anaérobies facultatives. Lesdites souches de *Lactobacillus* ont été déposées auprès de la Collection Nationale de Cultures de Micro-organismes (CNCM), en date du 28 juillet 1994, pour ce qui concerne *Lactobacillus rhamnosus* sous les numéros 1-1450, I-1452, I-1453, I-1454, I-1455, I-1456, I-1459, pour ce qui concerne *Lactobacillus paracasei*, sous les numéros I-1451, I-1457 et I-1458, pour ce qui concerne *Lactobacillus acidophilus,* sous le numéro I-1460 et pour ce qui concerne *Lactobacillus fermentum*, sous le numéro I-1461 ;
. des souches de *Pediococcus* à Gram positif qui présentent une activité de type bactériocine ou bactériocine-like au moins vis-à-vis de *Staphylococcus aureus,* et au moins les caractéristiques biochimiques suivantes : catalase -, oxydase - et qui sont de préférence aérobies/anaérobies facultatives. On peut notamment citer comme souche de *Pediococcus* répondant à cette définition, la souche *Pediococcus pentosaceus*, déposée auprès de la Collection Nationale de Cultures de Micro-organismes (CNCM), en date du 22 décembre 1995, sous le numéro I-1654.

Ils peuvent inclure également les souches suivantes :
d'autres souches de *Bacillus* à Gram positif, qui ont également été déposées auprès de la Collection Nationale de Cultures de Micro-organismes (CNCM), 25 rue du Docteur Roux, 75724 Paris cedex 15, en date du 6 juin 2001 : la souche de *Bacillus amyloliquefasciens* ISB13, sous le numéro 1-2680 et la souche de *Bacillus circulans* (ISB14), sous le numéro 1-2681.
   . une autre souche de *Pediococcus* à Gram positif, qui a également été déposée auprès de la Collection Nationale de Cultures de Micro-organismes (CNCM), 25 rue du Docteur Roux, 75724 Paris cedex 15, en date du 6 juin 2001 : la souche *Pediococcus pentosaceus* (ICP02), sous le numéro I-2682 et
   . une souche de *Lactococcus* à Gram positif qui a également été déposée auprès de la Collection Nationale de Cultures de Micro-organismes (CNCM), 25 rue du Docteur Roux, 75724 Paris cedex 15, en date du 6 juin 2001 : la souche *Lactococcus lactis lactis* (ISLac01) sous le numéro I-2683.

Le Tableau suivant fait une synthèse de l'ensemble des souches sélectionnées pour les différents complexes bactériens utilisables dans la prévention des maladies nosocomiales.

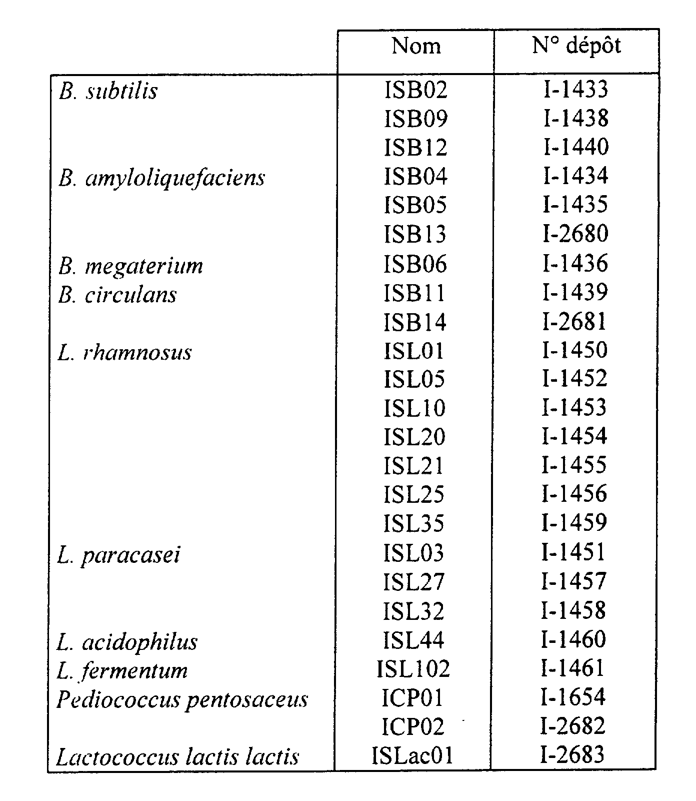

De manière inattendue, des complexes bactériens, contenant lesdites souches, sont particulièrement actifs contre les souches nosocomiales.

Selon un autre mode de réalisation avantageux de ladite utilisation, lesdites compositions sont avantageusement constituées d'au moins trois *Bacillus* parmi lesquels au moins un *B. amyloliquefaciens* et un *B. megaterium*, les autres *Bacillus* présents étant sélectionnés dans le groupe constitué par *B. subtilis* et *B. circulans,* chacun à une concentration de 10³-5.10⁵ ufc/g, d'au moins trois *Lactobacillus,* parmi lesquels au moins un *L. rhamnosus* et un *L. acidophilus,* les autres *Lactobacillus* présents étant sélectionnés dans le groupe constitué par *L. rhamnosus* et *L. paracasei* et d'un *Pediococcus penlosaceus,* chacun à une concentration comprise entre 10⁵ et 5.10⁹ ufc/g.

Selon une disposition avantageuse de ce mode de réalisation lesdites compositions comprennent deux *B. subtilis*, un *B. amyloliquefaciens,* un *B. megate rium,* tels que définis ci-dessus, chacun à une concentration de 10³-5.10⁵ ufc/g, un ou deux *L. rhamnosus,* un *L. paracasei,* un *L. acidophilus*, un *Pediococcus pentosaceus* et éventuellement un *L. fermentum,* tels que définis ci-dessus, chacun à une concentration de 10⁵-5.10⁹ ufc/g.

Selon une modalité avantageuse de cette disposition, la composition est essentiellement constituée d'un complexe bactérien comprenant les quatre *Bacillus* suivants : deux *Bacillus subtilis*, respectivement déposés sous les numéros I-1433 (ISB02) et I-1438 (ISB09), un *Bacillus amyloliquefaciens*, déposé sous le numéro I-1435 (ISB05) et un *Bacillus megaterium*, déposé sous le numéro I-1436 (ISB06) ; les quatre *Lactobacillus* suivants: deux *Lactobacillus rhamnosus*, respectivement déposés sous les numéros I-1450 (ISL01) et I-1454 (ISL20), un *Lactobacillus paracasei,* déposé sous le numéro I-1458 (ISL32) et *Lactobacillus acidophilus*, déposé sous le numéro I-1460 (ISL44) ainsi qu'un *Pediococcus pentosaceus*, déposé sous le numéro I-1654 (ICP01).

Selon une autre disposition avantageuse de ce mode de réalisation lesdites compositions comprennent deux *B. amyloliquefaciens*, un *B. megaterium*, un *B. circulans* tels que définis ci-dessus, chacun à une concentration de 10³-5.10⁵ ufc/g, un *L. rhamnosus*, un *L. acidophilus*, un *Pediococcus pentosaceus* et un *Lactococcus lactis lactis,* tels que définis ci-dessus, chacun à une concentration de 10⁵-5.10⁹ ufc/g.

Selon une modalité avantageuse de cette disposition, la composition est essentiellement constituée d'un complexe bactérien comprenant les quatre *Bacillus* suivants : deux *B. amyloliquefaciens,* respectivement déposés sous les numéros I-1435 (ISB05) et I-2680 (ISB13), un *B. megaterium*, déposé sous le numéro I-1436 (ISB06) et un *B. circulans*, déposé sous le numéro 1-2681 (ISB14); les deux *Lactobacillus* suivants : un *L. rhamnosus,* déposé sous le numéro 1-1450 (ISL01) et un *L. acidophilus*, déposé sous le numéro I-1460 (ISL44) ; un *Lactococcus* l*actis lactis,* déposé sous le numéro I-2683 (ISLac01) et un *Pediococcus pentosaceus* (ICP02), déposé sous le numéro I-2682. Cette composition est appelée ci-après SX13.

De manière surprenante, les différents microorganismes constituant les différents complexes bactériens tels que définis ci-dessus, agissent en synergie pour :
- former un biofilm positif stable, très adhérent au niveau des surfaces, telles que les sols, murs et plafonds, y compris celles possédant déjà un biofilm négatif ou empêcher le développement du biofilm négatif ou le relargage.
- et augmenter l'efficacité inhibitrice du complexe bactérien vis-à-vis des souches nosocomiales.

Les concentrations des différents complexes mis en oeuvre peuvent également être exprimées en concentrations finales (forme liquide prête à l'emploi) : environ 10²-5.10⁴ *Bacillus*/ml et environ 10⁴-10⁷ *Lactobacillus*, *Pediococcus* ou *Lactococcus*/ml. Dans ce cas, les compositions contenant lesdits complexes, se présentent alors sous la forme d'une solution aqueuse dans laquelle les concentrations finales en bactéries sont celles précisées ci-avant.

Selon un autre mode de réalisation avantageux de ladite utilisation, les solutions mises en oeuvre sont à une concentration en complexe bactérien de 0,5 à 2 % (p/v).

Selon un autre mode de réalisation avantageux de ladite utilisation, les solutions mises en oeuvre sont pulvérisées à raison de 10-100 ml/m².

La présente invention a également pour objet des complexes bactériens qui sont particulièrement avantageux pour lutter contre les maladies nosocomiales : il s'agit des complexes bactériens qui comprennent au moins l'une des souches suivantes : la souche de *Bacillus amyloliquefasciens* (ISB13), déposée sous le numéro I-2680, la souche de *Bacillus circulans* (ISB14), déposée sous le numéro I-2681, la souche *Pediococcus pentosaceus* (ICP02), déposée sous le numéro I-2682 ou la souche *Lactococcus lactis lactis* (ISLac01), déposée sous le numéro I-2683.

Conformément à l'invention, les proportions *Lactobacillus:Bacillus,* dans ledit complexe, sont comprises, selon les cas, soit entre 1000:1 et 1:1000, soit entre 100:1 et 1:100, de préférence entre 10:1 et 1:10.

De manière avantageuse, lorsque ledit complexe bactérien comprend plusieurs *Bacillus* et/ou plusieurs *Lactobacillus*, les différentes souches d'un même genre (*Bacillus* ou *Lactobacillus*) sont dans un rapport compris entre 1:10 et 1:1000.

Selon un mode de réalisation avantageux dudit complexe bactérien , il comprend essentiellement les quatre *Bacillus* suivants : deux *B. amyloliquefaciens,* respectivement déposés sous les numéros 1-1435 (ISB05) et I-2680 (ISB13), un *B. megaterium,* déposé sous le numéro 1-1436 (ISB06) et un *B. circulans,* déposé sous le numéro I-2681 (ISB14) ; les deux *Lactobacillus* suivants : un *L. rhamnosus,* déposé sous le numéro I-1450 (ISL01) et un *L. acidophilus*, déposé sous le numéro I-1460 (ISL44) ; un *Lactococcus* l*actis lactis,* déposé sous le numéro I-2683 (ISLac01) et un *Pediococcus pentosaceus* (ICP02), déposé sous le numéro I-2682. Ce complexe a été dénommé SX13.

La présente invention a également pour objet une composition sous la forme d'une poudre, prête à être mise en solution dans l'eau, pour un traitement des surfaces, caractérisée en ce qu'elle comprend essentiellement un complexe bactérien qui comprend au moins l'une des souches suivantes : la souche de *Bacillus amyloliquefasciens* (ISB13), déposée sous le numéro I-2680, la souche de *Bacillus circulans* (ISB14), déposée sous le numéro I-2681, la souche *Pediococcus pentosaceus* (ICP02), déposée sous le numéro I-2682 et la souche *Lactococcus lactis lactis* (ISLac01), déposée sous le numéro I-2683 et au moins un support ou diluant nutritif soluble dans l'eau sélectionné dans le groupe constitué par des sources d'acides aminés et des sucres.

La présente invention a également pour objet les nouvelles bactéries ISB13, ISB14, ICP02 et ISLac01, telles que définies ci-dessus et mieux décrites dans les exemples qui suivent.

La présente invention a également pour objet un coffret de réactifs pour la prévention des infections nosocomiales, caractérisé en ce qu'il comprend au moins une composition telle que définie ci-dessus, essentiellement constituée d'un complexe bactérien, sous la forme de poudre ou de granules ; ladite composition est prête à être mise en solution dans de l'eau.

La présente invention a également pour objet un procédé de prévention des infections nosocomiales, caractérisé en ce qu'il comprend la pulvérisation de façon homogène, avec une solution aqueuse d'un complexe bactérien tel que défini ci-dessus, des différentes surfaces des locaux à traiter, à chaque changement de patient et après chaque désinfection à raison de 10-100 ml/m².

Outre les dispositions qui précèdent, l'invention comprend encore d'autres dispositions qui ressortiront de la description qui va suivre, qui se réfère à des exemples de mise en oeuvre des compositions solides ou solutions aqueuses à base de complexes bactériens selon l'invention et du procédé préventif au développement des infections nosocomiales, particulièrement en milieu hospitalier dans les locaux non stériles.

### EXEMPLE 1 : Caractéristiques des nouvelles souches de Bacillus conformes à l'invention.

Lesdites souches présentent les caractéristiques morphologiques et biochimiques illustrées au Tableau I suivant :

**TABLEAU I**

| *Caractéristiques* | ***B. amyloliquefasciens* (ISB13)** | ***B. circulans* (ISB14)** |
|---|---|---|
| Bacilles | courts et trapus | courts et trapus |
| Gram+ | + | + |
| Milieu de culture préconisé | BNG | BNG |
| Mobilité | - | - |
| Température d'incubation | 30°C | 30°C |
| Croissance à : 10°C | - | - |
| 55°C | - | - |
| Croissance à : 2 % NaCl | + | + |
| 5 % NaCl | + | + |
| 7 % NaCl | + | + |
| 10 % NaCl | + | + |
| Citrate | - | - |
| Acétoïne | - | - |
| Gélatinase | + | + |
| Nitrate | - | - |
| N₂ | - | - |
| NO₂ | + | + |
| Fermentation du glucose | + | + |
| Catalase | + | + |
| Oxydase | ± | ± |
| Uréase | - | - |
| ONPG | - | - |
| Indole | - | - |
| Caséine | + | + |
| ADH | - | - |

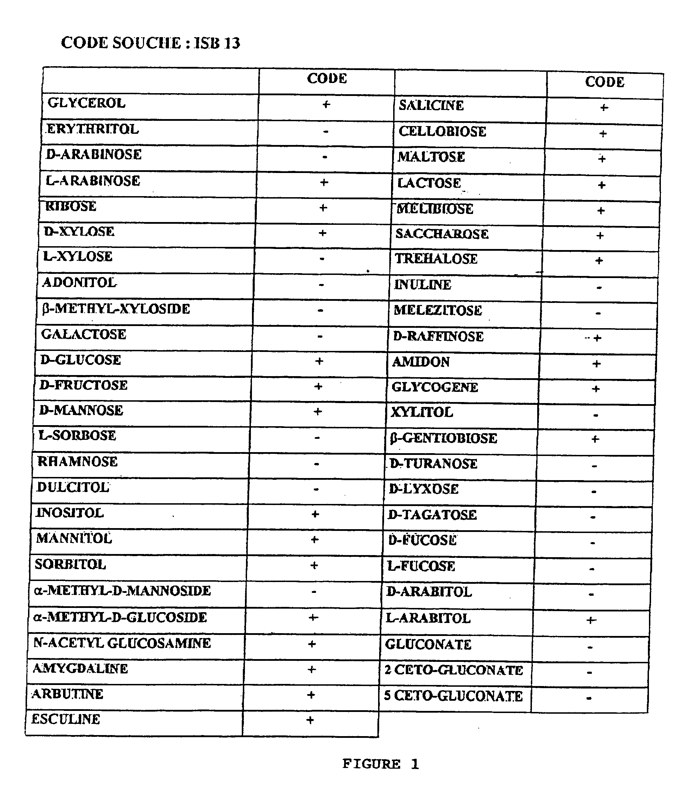

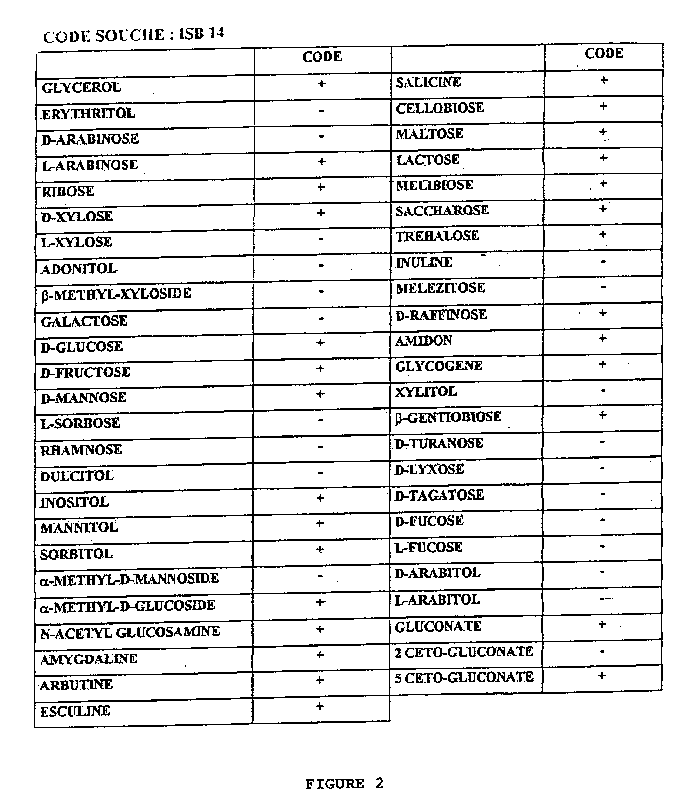

Les résultats des galeries API 50 CH donnant le profil de fermentation des sucres (caractères positifs après 48h maximum d'incubation) (inoculation selon API) (point 2 dans l'échelle de MacFarland) sont illustrés aux figures 1 et 2.

### EXEMPLE 2 : Caractéristiques d'une nouvelle souche de Lactococcus conforme à l'invention.

Ladite souche présente les caractéristiques morphologiques et biochimiques illustrées au Tableau II suivant :

**TABLEAU II**

| ***Caractéristiques*** | ***L. lactis lactis* (ISLac01)** |
|---|---|
| Bâtonnets | en forme de coccobacilles disposées en paire ou en chaînette |
| Gram+ | + |
| Milieu de culture préconisé | Trypticase soja |
| Mobilité | - |
| Température d'incubation | 37°C |
| Croissance à : 15°C | + |
| 40°C | + |
| Croissance à : 2 % NaCl | + |
| 4 % NaCl | + |
| 8 % NaCl | - |
| Catalase | - |
| Oxydase | - |
| Fermentation du lactose | - |
| Fermentation du mannitol | - |
| Fermentation du raffinose | - |

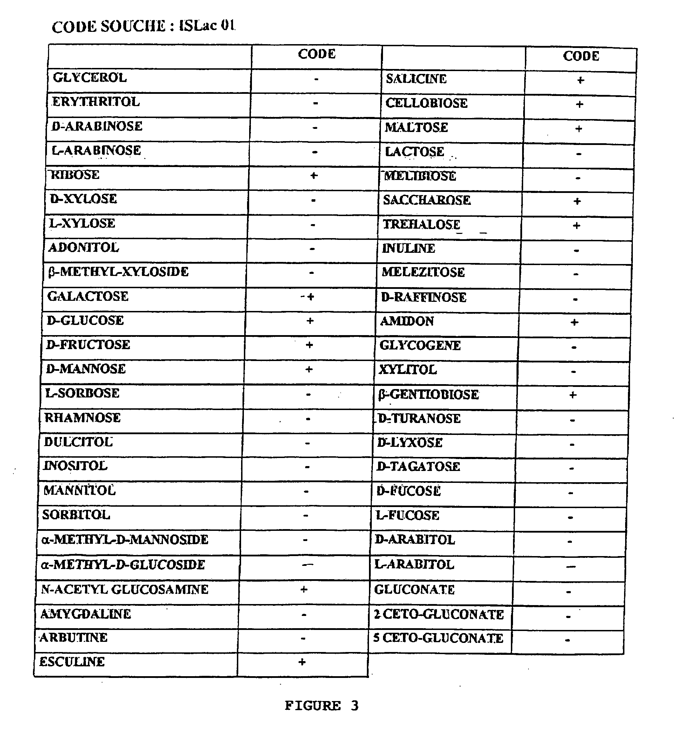

Les résultats des galeries API 50 CH donnant le profil de fermentation des sucres (caractères positifs après 48 h maximum d'incubation) (inoculation selon API) sont illustrés à la figure 3.

### EXEMPLE 3 : Caractéristiques d'une nouvelle souche de Pediococcus conforme à l'invention.

Ladite souche présente les caractéristiques morphologiques et biochimiques illustrées au Tableau III suivant :

**TABLEAU III**

| ***Caractéristiques*** | ***P. pentosaceus* (ICP02)** |
|---|---|
| *Cocci* | en paire et en tétrade |
| Gram+ | + |
| Milieu de culture préconisé | MRS |
| Température d'incubation | 37°C |
| Croissance à : 15°C | + |
| 45°C | + |
| Croissance à : 4 % NaCl | + |
| 6,5 % NaCl | + |
| 15 % NaCl | - |
| Acétoïne | + |
| NO₂ | - |
| N₂ | + |
| Croissance à pH 8 | + |
| Fermentation du glucose | + |
| Catalase | - |
| Oxydase | - |
| ONPG | - |
| Indole | - |

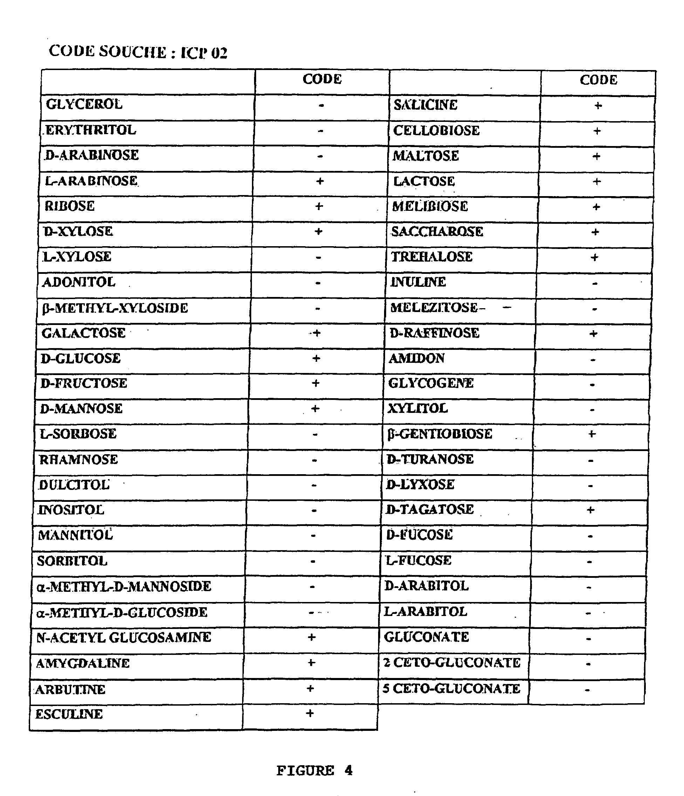

Les résultats des galeries API 50 CH donnant le profil de fermentation des sucres (caractères positifs après 48 h maximum d'incubation) (inoculation selon API) sont illustrés à la figure 4.

### EXEMPLE 4 : Complexe bactérien SX13.

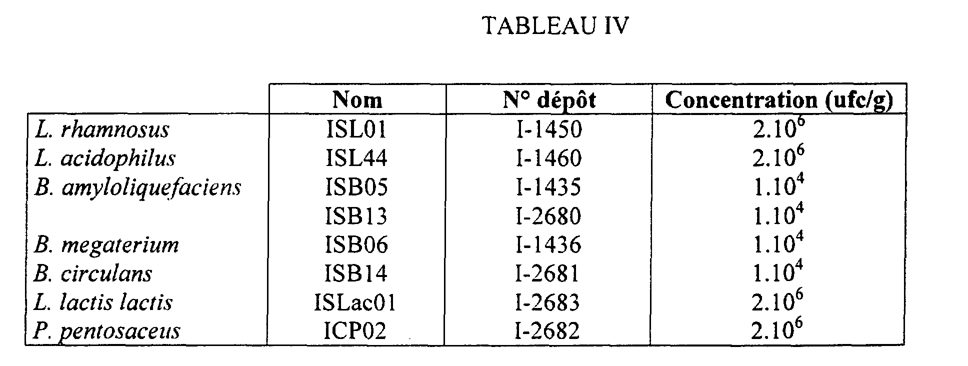

Ce complexe bactérien qui comprend notamment les souches ISB13, ISB14, ISLac01 et ICP02 a permis d'étendre le spectre d'inhibition aux souches pathogènes nosocomiales suivantes : *Enterococcus faecium, Staphylococcus aureus*..., augmentant ainsi l'efficacité inhibitrice du complexe bactérien.

### EXEMPLE 5 : Complexe bactérien SX12.

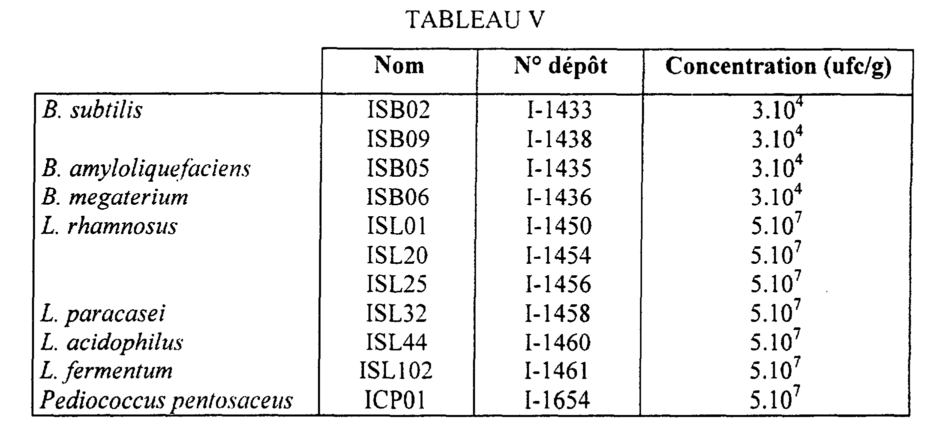

Ce complexe bactérien a notamment été décrit dans la Demande de Brevet Européen n° 0 852 114.

### EXEMPLE 6 : Mise en évidence de la synergie d'action entre les différentes bactéries des complexes bactériens sélectionnés : Inhibition de bactéries pathogènes nosocomiales par des surnageants de bactéries seules ou en complexe selon l'invention.

### - Protocole utilisé :

La technique utilisée est la technique d'inhibition en puits, décrite dans TAGG J.R. et al., *Applied Microbiol*., 1971, 21, 943, *Assay System for Bacteriocins*.

### - Résultats obtenus :

Les résultats sont donnés dans les Tableaux VI et VII ; ils correspondent aux résultats d'inhibitions de bactéries pathogènes, réalisées à partir de surnageants de cultures, selon la technique d'inhibition en puits et montrent les avantages et l'efficacité des compositions selon l'invention par rapport aux différentes souches constituant lesdits complexes, prises isolément.

Dans ces Tableaux le signe « + » indique une inhibition d'un diamètre > 2 mm, non compris le diamètre du puits.

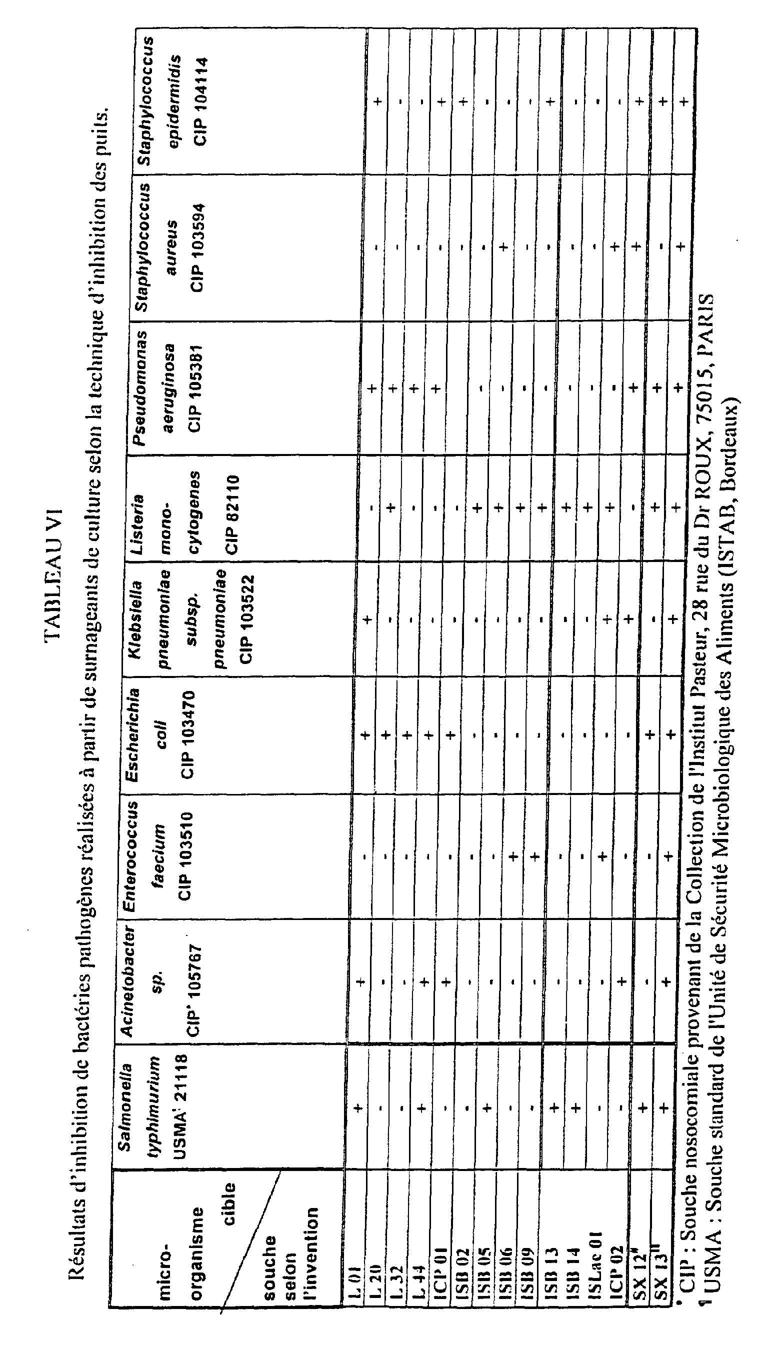

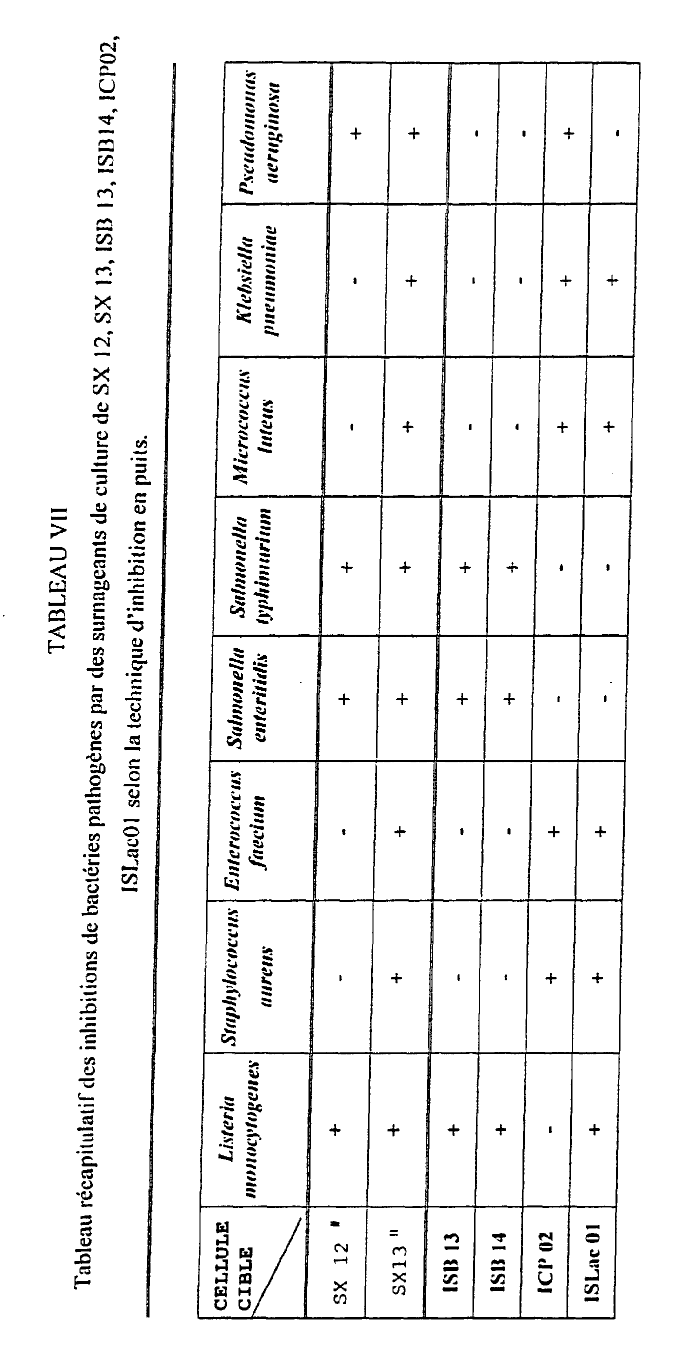

### EXEMPLE 7: Modulation des activités inhibitrices des bactéries et des complexes bactériens tels que définis ci-dessus en fonction du pH : Inhibition de bactéries pathogènes nosocomiales par des Bacillus :

Les essais sont réalisés à partir de surnageants de cultures de bactéries, selon la technique d'inhibition en puits, comme précisé ci-dessus.

Les résultats sont donnés dans le Tableau VIII ci-après et montrent que les *Bacillus*, pris isolément ne sont efficaces qu'à 72 heures, alors que les complexes selon l'invention permettent d'obtenir une action contre les souches nosocomiales, dès 24 heures.

Dans le Tableau VIII :
. + : indique une inhibition d'un diamètre > 2 mm, non compris le diamètre du puits
. le sigle CIP : correspond à une souche nosocomiale provenant de la Collection de l'Institut Pasteur, 28 rue du Dr ROUX, 75015, PARIS ;
. le sigle USMA : correspond à des souches standards de l'Unité de Sécurité Microbiologique des Aliments (ISTAB, Bordeaux).

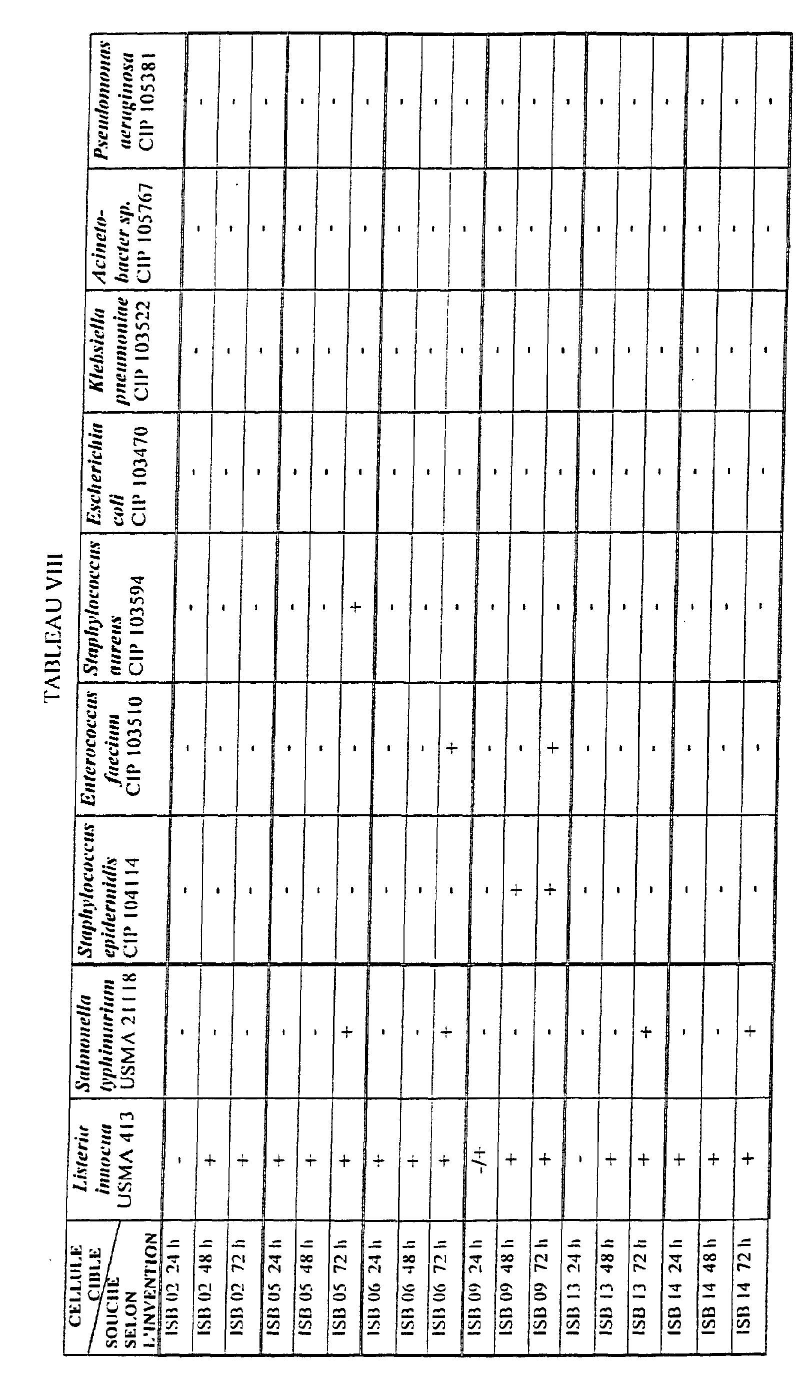

### EXEMPLE 8 : Capacité d'adhésion des différents complexes tels que définis ci-dessus.

### - Protocole :

Différents essais d'adhésion ont été réalisés selon la technique décrite par O'Toole G. et Kolter R. (Molecular Microbiology ; 28 ; 449-461, 1998).

Chacune des différentes souches du complexe SX 12 et le complexe bactérien SX 12 ont été testés pour leur capacité d'adhésion sur un support en polypropylène (microplaques).

Chaque cupule est remplie avec 100 µl de bouillon de Man Rogosa et Sharp (MRS) pour les bactéries lactiques ou de bouillon Tryptose pour les *Bacillus*. Chaque cupule est alors ensemencée avec 10 µl d'une préculture de 24 heures. Le complexe SX 12 est mis en suspension dans de l'eau, conformément au protocole suivant : dissoudre 1 kg de SX 12, dans 150 à 200 litres d'eau pure non déminéralisée, sans produit bactériostatique, ni chlore. (En cas de doute pour le chlore, ajouter de la poudre de lait écrémé à raison de 2,5 g par litre d'eau). Laisser agir un quart d'heure avant de réaliser la mise en suspension du SX 12.

Les microplaques sont incubées à 37°C en milieu aérobie.

A 24, 48 et 72 heures, 50 µl d'une solution de cristal violet à 1% sont ajoutés dans chaque cupule et laissés en contact pendant 30 minutes à température ambiante.

Les puits sont ensuite rincés délicatement avec 200 µl de NaCl à 0,9 %, puis séchés à l'air libre.

On ajoute alors 200 µl d'éthanol à 95 % dans chaque cupule.

On mesure ensuite l'absorbance à 585 nm avec 125 µl de la solution d'éthanol prélevée dans chaque puits.

### - Résultats :

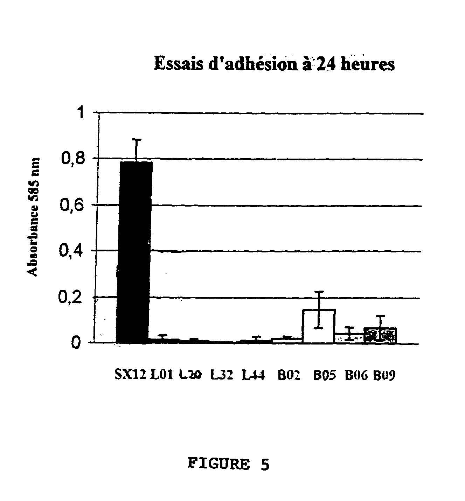

Testées séparément, les bactéries lactiques et les *Bacillus* qui constituent le complexe bactérien SX 12 présentent un pouvoir d'adhésion à 24 heures très faible, c'est-à-dire inférieur ou égal à 0,3 (absorbance à 580 nm). En revanche, le pouvoir d'adhésion du complexe bactérien SX 12 est beaucoup plus important, c'est-à-dire de l'ordre de 0,8 ± 0,2 (figure 5).

Cette différence de comportement est liée l'action synergique des bactéries constituant le complexe bactérien SX 12 dans le phénomène d'adhésion sur microplaque, ce qui est important pour le maintien des biofilms positifs sur les surfaces pulvérisées.

A 48 et 72 heures, le pouvoir d'adhésion des *Bacillus* s'accroît avec des valeurs moyennes d'absorbance variant de 0,75 à 3,125. Cependant, ces valeurs moyennes présentent des écarts types importants. Cette variation s'explique par la germination asynchrone des spores de *Bacillus* entraînant la formation d'un biofilm positif dans une et/ou deux des trois cupules.

## Revendications

1. Utilisation d'une composition essentiellement constituée d'un complexe bactérien, sous la forme d'une poudre, lequel complexe bactérien comprend essentiellement au moins deux *Bacillus* non pathogènes, sélectionnés dans le groupe constitué par *B. subtilis, B. amyloliquefasciens, B. circulans* et *B. megaterium*, chacun à une concentration comprise entre 10³ et 5.10⁵ ufc/g, au moins deux *Lactobacillus* non pathogènes, sélectionnés dans le groupe constitué par *L. paracasei, L. acidophilus* et *L. rhamnosus* et au moins un *Pediococcus* non pathogène, chacun à une concentration de 10⁵ à 5.10⁹ ufc/g, pour la production d'une solution aqueuse apte à former un biofilm destiné à prévenir les maladies nosocomiales.

2. Utilisation selon la revendication 1, **caractérisée en ce que** ladite composition comprend en outre au moins un *Lactococcus*, présent aux mêmes concentrations que les *Lactobacillus* et les *Pediococcus.*

3. Utilisation selon la revendication 1 ou la revendication 2, **caractérisée en ce que** ledit complexe bactérien est associé à au moins un support ou diluant nutritif soluble dans l'eau sélectionné dans le groupe constitué par des sources d'acides aminés et des sucres.

4. Utilisation selon l'une quelconque des revendications 1 à 3, **caractérisée en ce que** lesdites compositions sont avantageusement constituées d'au moins trois *Bacillus* parmi lesquels au moins un *B. amyloliquefaciens* et un *B. megaterium,* les autres *Bacillus* présents étant sélectionnés dans le groupe constitué par *B. subtilis* et *B. circulans*, chacun à une concentration de 10³-5.10⁵ ufc/g, d'au moins trois *Lactobacillus*, parmi lesquels au moins un *L. rhamnosus* et un *L. acidophilus*, les autres *Lactobacillus* présents étant sélectionnés dans le groupe constitué par *L. rhamnosus* et *L. paracasei* et d'un *Pediococcus pentosaceus,* chacun à une concentration comprise entre 10⁵ et 5.10⁹ ufc/g.

5. Utilisation selon la revendication 4, **caractérisée en ce que** lesdites compositions comprennent deux *B. subtilis*, un *B. amyloliquefaciens*, un *B. megaterium*, un ou deux *L. rhamnosus.* un *L. paracasei,* un *L. acidophilus*, un *Pediococcus pentosceus* et éventuellement un *L. fermentum*.

6. Utilisation selon la revendication 4 ou la revendication 5, **caractérisée en ce que** la composition est essentiellement constituée d'un complexe bactérien comprenant les quatre *Bacillus* suivants : deux *Bacillus subtilis,* respectivement déposés sous les numéros 1-1433 (ISB02) et I-1438 (ISB09), un *Bacillus amyloliquefaciens*, déposé sous le numéro 1-1435 (ISB05) et un *Bacillus megaterium*, déposé sous le numéro 1-1436 (ISB06) ; les quatre *Lactobacillus* suivants : deux *Lactobacillus rhamnosus*, respectivement déposés sous les numéros I-1450 (ISL01) et I-1454 (ISL20), un *Lactobucillus paracasei*, déposé sous le numéro I-1458 (ISL32) et *Lactobacillus acidophilus*, déposé sous le numéro I-1460 (ISL44) ainsi qu'un *Pediococcus pentosaceus*, déposé sous le numéro I-1654 (ICP01).

7. Utilisation selon la revendication 4, **caractérisée en ce que** lesdites compositions comprennent deux *B. amyloliquefaciens,* un *B. megaterium*, un *B. circulans,* un *L. rhamnosus,* un *L. acidophilus*, un *Pediococcus pentosaceus* et un *Lactococcus lactis lactis.*

8. Utilisation selon la revendication 4 ou la revendication 7, **caractérisée en ce que** la composition est essentiellement constituée d'un complexe bactérien comprenant les quatre *Bacillus* suivants : deux *B. amyloliquefaciens*, respectivement déposés sous les numéros I-1435 (ISB05) et I-2680 (ISB13), un B. *megaterium*, déposé sous le numéro I-1436 (ISB06) et un *B. circulans,* déposé sous le numéro I-2681 (ISB14); les deux *Lactobacillus* suivants : un *L. rhamnosus,* déposé sous le numéro I-1450 (ISL01) et un *L. acidophilus,* déposé sous le numéro I-1460 (ISL44) ; un *Lactococcus* l*actis lactis,* déposé sous le numéro I-2683 (ISLac01) et un *Pediococcus pentosaceus* (ICP02), déposé sous le numéro I-2682.

9. Utilisation selon l'une quelconque des revendications 1 à 8, **caractérisée en ce que** ladite composition est sous la forme d'une solution aqueuse dans laquelle les concentrations finales en bactéries sont les suivantes : *Bacillus*, entre 10² et 5.10⁴ ufc/ml. *Lactobacillus, Pediococcus et Lactococcus,* entre 10⁴ et environ 10⁷ ufc/ml.

10. Utilisation selon la revendication 9, **caractérisée en ce que** les solutions mises en oeuvre sont à une concentration en complexe bactérien de 0,5 à 2 % (p/v).

11. Utilisation selon l'une quelconque des revendications 9 ou 10, **caractérisée en ce que** les solutions mises en oeuvre sont pulvérisées à raison de 10-100 ml/m²

12. Complexes bactériens, **caractérisés en ce qu'**ils comprennent au moins l'une des souches suivantes : la souche de *Bacillus amyloliquefasciens* (ISB13), déposée sous le numéro I-2680, la souche de *Bacillus circulans* (ISB14), déposée sous le numéro I-2681, la souche *Pediococcus pentosaceus* (ICP02), déposée sous le numéro I-2682 et la souche *Lactococcus lactis lactis* (ISLac01), déposée sous le numéro I-2683.

13. Complexe bactérien selon la revendication 12, **caractérisé en ce que** les proportions *Lactobacillus:Bacillus,* dans ledit complexe, sont comprises, selon les cas, soit entre 1000 :1 et 1 :1000, soit entre 100:1 et 1:100, de préférence entre 10:1 et 1:10.

14. Complexe bactérien selon la revendication 12 ou la revendication 13, **caractérisé en ce qu'**il comprend essentiellement les quatre *Bacillus* suivants : deux *B. amyloliquefaciens*, respectivement déposés sous les numéros I-1435 (ISB05) et I-2680 (ISB13), un *B. megaterium*, déposé sous le numéro I-1436 (ISB06) et un *B. circulans*, déposé sous le numéro I-2681 (ISB14) ; les deux *Lactobacillus* suivants: un *L. rhamnosus*, déposé sous le numéro I-1450 (ISL01) et un *L. acidophilus,* déposé sous le numéro I-1460 (ISL44) ; un *Lactococcus* l*actis lactis,* déposé sous le numéro I-2683 (ISLac01) et un *Pediococcus pentosaceus* (ICP02), déposé sous le numéro I-2682.

15. Composition sous la forme d'une poudre, prête à être mise en solution dans l'eau, pour un traitement des surfaces, **caractérisée en ce qu'**elle comprend essentiellement un complexe bactérien selon l'une quelconque des revendications 12 à 14 et au moins un support ou diluant nutritif soluble dans l'eau sélectionné dans le groupe constitué par des sources d'acides aminés et des sucres

16. Souches de *Bacillus* à Gram+, aptes à être utilisées dans un complexe bactérien selon l'une quelconque des revendications 12 à 14, **caractérisées en ce qu'**elles sont sélectionnées dans le groupe constitué par *B. amyloliquefaciens* (ISB13), déposée sous le numéro 1-2680 et la souche de *Bacillus circulans* (ISB14) déposée sous le numéro I-2681, auprès de la Collection Nationale de Cultures de Micro-organismes (CNCM), 25 rue du Docteur Roux, 75724 Paris cedex 15, en date du 6 juin 2001.

17. Souche de *Pediococcus* à Gram+, apte à être utilisée dans un complexe bactérien selon l'une quelconque des revendications 12 à 14, caractérisée en qu'il s'agit d'une souche *Pediococcus pentosaceus* (ICP02) déposée sous le numéro I-2682 auprès de la Collection Nationale de Cultures de Micro-organismes (CNCM), 25 rue du Docteur Roux. 75724 Paris cedex 15, en date du 6 juin 2001.

18. Souche de *Lactococcus* à Gram+, apte à être utilisée dans un complexe bactérien selon l'une quelconque des revendications 12 à 14, caractérisée en qu'il s'agit d'une souche *Lactococcus lactis lactis* (ISLac01) déposée sous le numéro I-2683 auprès de la Collection Nationale de Cultures de Micro-organismes (CNCM), 25 rue du Docteur Roux, 75724 Paris cedex 15, en date du 6 juin 2001.

19. Coffret de réactifs pour la prévention des infections nosocomiales, **caractérisé en ce qu'**il comprend au moins une composition telle que définie dans la revendication 15, essentiellement constituée d'un complexe bactérien, sous la forme de poudre ou de granules, laquelle composition est prête à être mise en solution dans de l'eau.

20. Procédé de prévention des infections nosocomiales, **caractérisé en ce qu'**il comprend la pulvérisation de façon homogène, avec une solution aqueuse d'un complexe bactérien tel que défini aux revendications 1 à 11 des différentes surfaces des locaux à traiter, à chaque changement de patient et après chaque désinfection à raison de 10-100 ml/m².
